# NEW EUROPEAN PATENT SPECIFICATION

(11) **EP 0 411 724 B2**
(45) Date of publication and mention of the opposition decision: **07.06.2000**
(45) Mention of the grant of the patent: 09.10.1996
(21) Application number: 90202293.8
(22) Date of filing: 08.12.1988
(51) Int. Cl.: A01F 25/20

(54) **Device for removing silage from a silage supply**
Silageentnahmevorrichtung aus einem Silo
Dispositif pour enlever de l'ensilage d'un silo

(30) Priority: 09.05.1988 NL 8801220; 16.06.1988 NL 8801537
(43) Date of publication of application: 06.02.1991
(62) Divisional of application: 88202817.8
(73) Proprietor: LITECH B.V., NL-7521 PD Enschede (NL)
(72) Inventor: Liet, Cornelis Hendricus, NL-7581 PJ Losser (NL); Liet, Fredericus, NL-7581 HD Losser (NL)
(74) Representative: de Vries, Johannes Hendrik Fokke

(56) References cited:
- EP-A- 0 102 437
- DE-A- 3 344 406
- DE-A- 3 536 141
- DE-A- 3 643 353
- US-A- 3 193 925

## Description

The invention relates to a device for removing silage from a silage supply in accordance with the preamble of claim 1. Such a silage cutter is known from NL-A-8204501.

Further silage cutters of this type are known for instance from EP-A 0 264 157 and EP-A 0 102 437.

The silage cutter according to EP-A 0 264 157 has teeth with a blunt lower edge. As a result this known device needs a comparatively large amount of power to penetrate into the often hard silage in order to perform the required cutting process through the reciprocating movement of the cutter plates.

The device according to EP-A 0 102 437 makes use of teeth having cutting edges joined to each other at obtuse angles. Thereby the penetration of the teeth into the silage material takes place reasonably effectively, but to a small depth, resulting in the effectiveness of the cutting leaving something to be desired.

The invention has for its object to improve the cutting action of the known devices.

To this end the device according to the invention is characterized by the features of the characterizing part of claim 1.

It has been found that the cutting action with the device according to the invention is considerably improved, with the result that the vertical force to be exerted by the support frame on the silage can be considerably smaller. During the reciprocating movement of the movable cutter the support frame will deform slightly and perform a small movement in opposing direction, which is of benefit to the cutting action. Driving of only one cutter plate also results in a cheaper device.

It is of advantage when the teeth points of the teeth of both cutter plates of a pair lie at least virtually in the same horizontal plane. Both rows of cutting teeth are consequently of equal value, which results in both cutter plates making a good contribution to the cutting of the silage.

The scissor-like movement can be performed particularly effectively if at the end of each stroke the teeth are held at rest for a short time relative to the duration of the stroke, such by means of a buffering suitable for this purpose. As a result, when the support frame is set in downward motion, the space between the teeth can always be very well filled with the material for cutting and a real scissor-like movement is carried out very effectively, resulting in the useful effect of the cutting becoming significantly greater.

The device of the invention has the characteristic that the cutting edges of adjoining teeth of a cutter plate are bounded by a concave surface which is sloping relative to the relevant cutter plate and which is situated on the surface of the relevant cutter plate facing away from the other cutter plate, such that the sloping faces adjoin one another and the relevant cutter plate comes to a sharp point on one side over the whole of the portion furnished with teeth.

Such a form can be obtained in simple manner in an embodiment where a sloping surface possesses the form of a portion of a cylinder surface such that the associated cutting edge has the shape of a part-ellipse. It will be apparent that the described form of the sloping faces and thereby the form of the teeth can be realized through the use of a process using one or more cylindrical cutters.

Simple interchangeability of the plates results from the feature that all the teeth of a pair have the same form. This also has the advantage that it is possible to suffice with the same one type of manufacturing device.

The invention is further elucidated hereinafter with reference to the drawing, in which a number of embodiments of the device according to the invention are shown, to which the invention is not restricted.
Fig. 1 shows schematically a perspective view of a first embodiment of a device for cutting of silage according to the invention;
Fig. 2 shows on a larger scale a part of the device from fig. 1;
Fig. 3 shows a section along the line III-III in fig. 2 on a larger scale than in fig. 2;
Fig. 4 shows a section along the line IV-IV in fig. 2 on a larger scale than in fig. 2;
Fig. 5 is a hydraulic diagram of the operation of the device shown in fig. 1;
Fig. 6 shows schematically a perspective view of a second embodiment of a device for cutting of silage according to the invention;
Fig. 7 shows, as seen from the inside, a portion of the body of the U-shaped support frame of the device from fig. 1 on a larger scale; and
Fig. 8 is a section through the body of the support frame of fig. 7 along the line VIII-VIII.

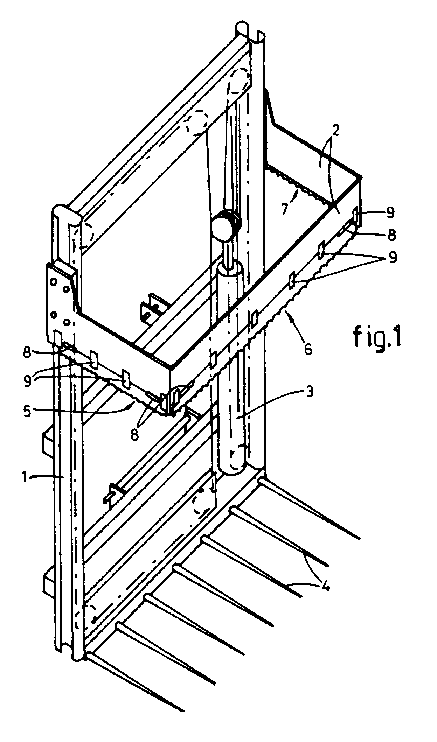

The device shown in fig. 1 for cutting silage possesses a substantially vertical extending guiding frame 1 and an at least virtually horizontal U-shaped support frame 2 that can move up and down along this guiding frame 1. Employed in a manner not further indicated for this up and downward movement of the support frame 2 relative to guiding frame 1 is a cylinder-piston assembly 3. On its lower outer end the guiding frame 1 has bearing teeth 4 for carrying a cut-out block of silage.

No further consideration of the details of the design of the guiding frame 1 is made here since it possesses a conventional construction that is already known.

The device shown in fig. 1 can be mounted in its entirety on the front or rear of a tractor.

The support fram 2 is provided on each of its three sides with a downward directed cutting member 5, 6, 7 that is movable reciprocally in horizontal direction for a cutting action. The reciprocal movement of these cutting members 5, 6, 7 is brought about by cylinder-piston assemblies 8 which are shown only schematically in fig. 1.

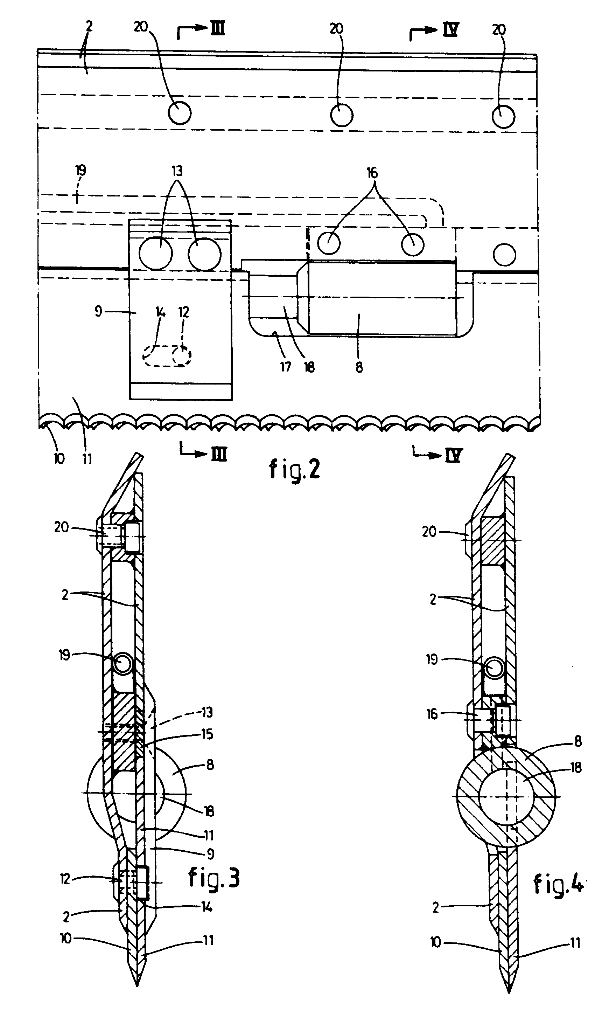

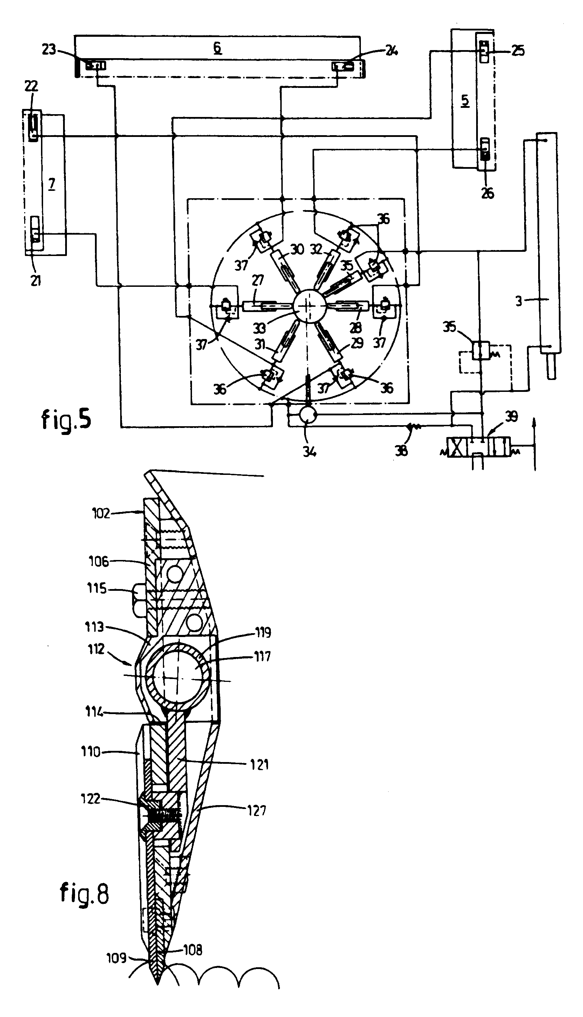

As will be apparent from the figures 2-4 each cutting member comprises two closely adjoining cutter plates 10 and 11, the cutter plate 10 being in fixed connection with the support frame 2. The reciprocally movable cutter plates are locked with respect to the support frame 2 by retaining lips 9 which are also only shown schematically in fig. 1. At the bottom the cutter plates 10 and 11 have series of cutting teeth.

Arranged in cutter plates 11 are guide slots 14 which co-operate with attachment members 12 of the fixed cutter plates, in the form for example of socket head screws, arranged in the support frame 2.

Fixed to the support frame 2 for the absorption of the vertical forces acting on the reciprocally movable cutter plate 11 are support portions 15 of bronze or the like which co-act with the upper edge of the reciprocally movable cutter plate 11 facing away from the series of cutting teeth. It is additionally noted that the retaining lips 9 may likewise be made of bronze or the like. Both the retaining lips 9 and the support portions 15 are connected to the support frame 2 by fastening members 13.

The cylinder-piston assemblies 8 already illustrated schematically in fig. 1 are attached to support fram 2 by means of fastening members 16. The movable cutter plates 11 have cut-away portions 17 which accommodate the associated cylinder-piston assemblies. The piston rods 18 of the cylinder-piston assemblies 8 grip with their outer ends onto one of the side edges of each cut-away portion 17. When a cylinder-piston assembly 8 is energised and the piston rod is pressed outward, the outer end of this piston rod 18 presses against the said side edge of the cut-away portion 17 and the movable cutter plate is displaced with respect to the support frame 2.

It is possible for each cylinder-piston assembly to be of the double-action type that can displace a movable cutter plate 11 in one direction as well as the opposing direction. In the embodiment as in fig. 1 however each movable cutter plate 11 is furnished with a pair of single cylinder-piston assemblies 8 acting in opposing directions. Each cylinder-piston assembly 8 can hereby exert a force in only one direction. Through alternate energising of the cylinder-piston assemblies 8 of each pair a reciprocating movement of the movable cutter plate 11 can be achieved.

Also to be seen in the figures 2, 3 and 4 are: an oil line 19 leading to the cylinder-piston assembly 8 and connecting components 20 for assembly of the upper part of support frame 2. Not shown is a protective cover that may optionally be arranged around each cylinder-piston assembly 8.

In order to obtain a good cutting action the series of cutting teeth (as shown in fig. 2) have a tooth pitch equal to or a little smaller than the stroke of both cutter plates 10 and 11 relative to one another (as defined for instance by the length of the groove 14 or, as in figure 10, by the interval between the piston 117 and the cover 124).

Further to be seen is that the tooth points of the series of cutting teeth of both cutter plates 10 and 11 are located at least virtually in the same horizontal plane.

As already explained above the reciprocating movement of cutter plate 11 is obtained by energising in each case the cylinder-piston assemblies 8 belonging to the relevant cutter plate in appropriate manner and at the suitable moment. It is now possible for the cylinder-piston assemblies 8 to be switched on, each in turn, in order to move the relevant cutter plate in a particular direction. Per se known switch-on and switch-off valves can be employed for this purpose. The cylinder-piston assemblies of the various cutter plates can in each case be connected in parallel in suitable manner. This means that the various cutter plates perform a synchronised reciprocal movement.

Shown in fig. 5 is a hydraulic working diagram for another way of energising the cylinder-piston assemblies.

This single-action cylinder-piston assemblies of the three cutting members 5-7 are designated with the reference numerals 21-26. Each cylinder-piston assembly 21-26 is connected via a line to the outlet of an associated pump cylinder 27-32. The pump cylinders 27-32 are positioned about an eccentric 33 in the form of a circular disc with an eccentric axis of rotation. The eccentric 33 is driven by a hydromotor 34.

When the eccentric 33 is driven by the hydromotor 34 the pump cylinders 27-32 will be energised via a continuous periodic function, in this case a sine function, whereby the coupling between these pump cylinders and the associated cylinder-piston assemblies 21-26 leads to a similarly continuous periodic energising of these cylinder-piston assemblies. As will be apparent from the diagram in fig. 5 the pump cylinders 27-32 are positioned around the eccentric 33 such that the pump cylinders connected to the cylinder-piston assemblies belonging to one pair are each positioned on opposite facing sides of the eccentric 33. In this way the pump cylinders 27 and 28, 29 and 30, and 31 and 32 are always positioned opposite each other. This ensures that the cylinder-piston assemblies of one pair always differ 180° in phase where energising is concerned. Thus for example when cylinder-piston assembly 21 is pushed out, the cylinder-piston assembly 22 is retracted.

As a result of the choice of the energising function of the cylinder-piston assemblies 21-26, the cutter plates of the cutting members 5-7 are moved reciprocally in a required movement.

Connected to the eccentric 33 is a further pump cylinder 35 which provides the energising of the cylinder-piston assembly 3 (see fig. 1) for the up and downward movement of the support frame 2.

The pump cylinders 27-32 are distributed regularly about the eccentric 33 so that a regular loading is applied thereto. The capacity of the hydromotor 34 can be minimal as a result.

It is of course possible to effect the energising of the three respective pairs of cylinder-piston assemblies 21 and 22, 23 and 24, 25 and 26 by using only two pump cylinders placed opposite one another. The said pairs of cylinder-piston assemblies are connected in parallel in such a case. There also exists the possibility of using more than one pair of cylinder-piston assemblies per cutter plate. A parallel connection may also be employed here.

Further referred to in fig. 5 are: a rapid-action feed 35 for the cylinder-piston assembly 3, safety valves 36, filler valves 37, a biased filler valve 38 in addition to a control valve 39 that can for instance be operated from the tractor.

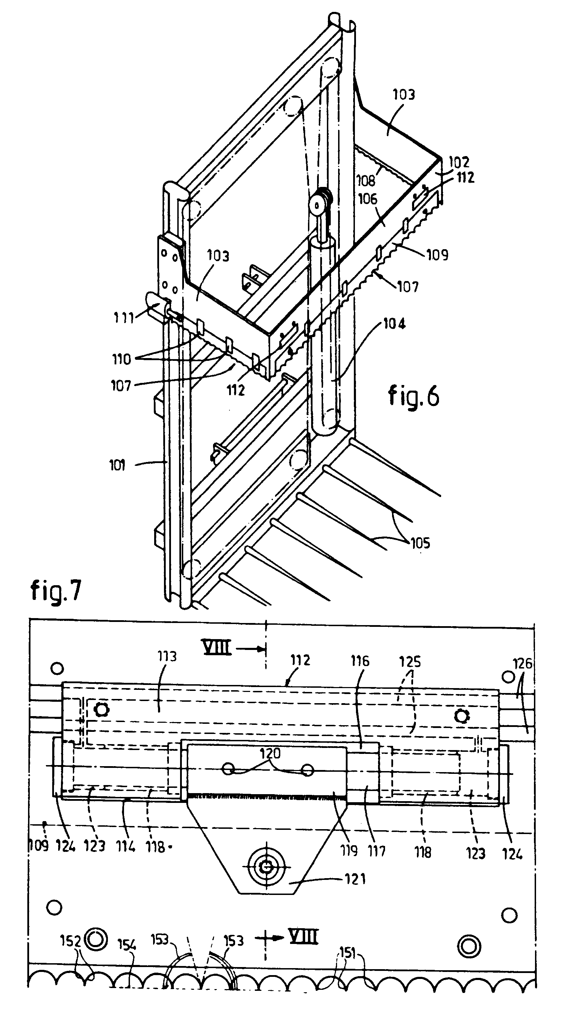

Shown in fig. 6 is a device for cutting silage, which is provided with a substantially vertical standing guiding frame 101 and an at least virtually horizontal U-shaped support frame 102. The support frame 102 is movable with its legs up and down along the guiding frame 101 by means of a cylinder-piston assembly 104. This driving of the support frame is per se known and is therefore not described further. At the lower end the guiding frame 101 comprises bearing teeth 105 for carrying a cut-out block of silage. The device described can be coupled in the usual manner to a tractor.

The U-shaped support frame is provided on each of the legs 103 and on the body 106 with a cutting member 107 which consists in the embodiment shown of a stationary blade 108 and a blade 109 that is reciprocally movable relative to the support frame 102. The moving blade 109 is held in position on the support frame 102 using retaining lips 110. With respect to the construction of the cutting member 107 reference is made to the older Dutch priority application 8801220.

The driving of the movable cutting blade 109 of both legs 103 is provided by a double-action hydraulic cylinder-piston assembly 111, of which only one is shown in fig. 9. The driving of the movable cutting blade 109 of the body 106 is taken care of by two double-action cylinder-piston assemblies 112, one of which is shown in detail in the figures 7 and 8.

Each cylinder-piston assembly 112 is provided with a cylinder housing 113 that protrudes into a recess 114 in the body 106 of the support frame 102. Cylinder housing 113 is fastened to the body 106 using two bolts 115. The cylinder housing 113 has a central opening 116, wherein the piston in the form of a piston rod 117 runs through this central opening and is borne on either side thereof in elongate guide bushings 118 that are fitted in cylinder housing 113. Guide bushings 118 preferably consist of bronze.

Attached with the aid of locking pins 120 to the part of the piston rod 117 running through the central opening 116 is a casing 110 which encloses piston rod 117 in close fitting manner. Fixed to the casing 119 on the underside is a coupling plate 121. The coupling plate 121 is connected at its lower end to the cutting blade 109 by means of a bolt 122.

As can be seen in fig. 7 the piston rod 117 protrudes at both ends into a chamber 123 situated in cylinder housing 113. The chambers 123 are closed off at the outside by means of a screw cap 124. In addition each chamber 123 can be connected, via its own oil channel 125 and oil line 126 connected thereto, to a hydraulic control system, such that chambers 123 are joined alternately to the pressure and return pipes of a hydraulic power source.

As will also be seen in fig. 7 the teeth 151 display symmetrical points, the cutting edges 152 of which have ends which form angles 153 of more than 30°, and in this embodiment even of almost 90°, with the connecting line 154 between the points 151. The apex angle of the symmetrical teeth is thus smaller here than 90°, and even almost 0°. This form ensures the very effective scissor-like action described in the foregoing. The driving takes place for this purpose in such a way that the movable cutter plates move reciprocally such that at the ends of each stroke the teeth of the movable cutter plate and the teeth of the fixed cutter plate are located symmetrically relative to the point halfway between the points of the teeth. The teeth coincide at least substantially at the ends of each stroke. The latter method of driving in particular ensures that the co-acting cutting edges perform very effective successive scissor-like movements.

As will be particularly clear from fig. 8, each cylinder-piston assembly 112 lies on the inside of the support frame 102 relative to the movable cutting blade 109. As a result a comparatively small force is needed to move the support frame 102 downward through the silage, since the inward protruding cylinder housing 113, which is also protected by a guiding plate 127, can press away the cut-out silage relatively easily.

Because the movable cutting blade 109 is connected in the manner described to the piston rod 117 by means of casing 119 and coupling plate 121, the moments generated during operation by the cutting force are absorbed in the piston rod 117 and the guide bushings 118 and virtually no moments are created in the cutting blade 109. The moment caused by the distance between the centre line of the cutting blade 109 and the centre line of the piston rod 117 in the direction transversely of cutting blade 109 is also absorbed in piston rod 117 and guide bushings 118. This ensures a long useful life of the cutting blade 109. The moments that occur cause hardly any problem for the cylinder-piston assembly 112, since its components can be designed to absorb any moments that occur and good lubrication of the piston rod 117 in the guide bushings 118 is simply carried out.

The invention is not limited to the embodiments described in the foregoing which can be varied in different ways within the scope of the invention.

Although for examply only the cutting blade 109 of the body 106 is driven with the cylinder-piston assemblies 112, the cutting blades 109 of the legs 103 can if required also be driven by such cylinder-piston assemblies.

Although in the embodiment described a cylinder-piston assembly 112 is arranged on either side of cutting blade 109 of body 106, it is also possible to dispose one or more cylinder-piston assemblies 112 above on another at least roughly in the middle of the cutting blade 109. In the case of two or more cylinder-piston assemblies 122 situated above each other the cylinder housings 113 thereof can be combined into a common housing. When only one cylinder-piston assembly 112 is employed the piston rod 117 for generating the reguired forces may have an oval section.

## Claims

1. Device for cutting silage from a silage supply comprising a support frame (102) with a plurality of sides, said support frame being movable up and down, wherein each side of said support frame (102) is provided with a pair of downwardly directed cutter plates (108, 109) that are positioned close to one another, provided with rows of cutting teeth (151), co-acting and movable reciprocally relative to one another, wherein all teeth of each pair of cutter plates have the same form and have sharp points, of each pair of cutter plates, one (108) is fixed in position on the support frame and the other (109) is movable, all teeth (151) have sharp points with an apex angle less than 90°, **characterized in that** the cutting edges of adjoining teeth (151) of a cutter plate (108, 109) are bounded by a concave surface which is sloping relative to the relevant cutter plate and which is situated on the surface of the relevant cutter plate facing away from the other cutter plate, such that the sloping faces adjoin one another and the relevant cutter plate comes to a sharp point on one side over the whole of the portion furnished with teeth, wherein the driving of movable cutter plates (109) takes place in such a way that at the ends of each stroke the teeth of co-acting cutter plates (108, 109) substantially coincide, such that co-acting cutting edges perform successive scissor-like movements.

2. Device as claimed in claim 1, **characterized in that** the teeth points of the teeth of both cutter plates of a pair lie at least virtually in the same horizontal plane.

3. Device as claimed in claim 1 or 2, **characterized in that** a sloping surface possesses the form of a portion of a cylinder surface such that the associated cutting edge has the shape of a part-ellipse.

## Patentansprüche

1. Vorrichtung zum Trennen von Silage aus einem Silo, mit einem Stützrahmen (102) mit einer Mehrzahl von Seiten, wobei der Stützrahmen auf- und abbewegbar ist und jede Seite des Stützrahmens (102) mit einem Paar nach unten gerichteter Schneidplatten (108, 109) versehen ist, die eng zueinander positioniert und mit einer Reihe von Schneidezähnen (151) versehen sind, die zusammenwirken und relativ zueinander hin- und herbewegbar sind, wobei alle Zähne jedes Paares der Schneidplatten dieselbe Form und scharfe Spitzen aufweisen, und daß von jedem Paar der Schneidplatten das eine (108) in seiner Position an dem Stützrahmen festgelegt und das andere (109) bewegbar ist, und daß alle Zähne (151) scharfe Spitzen mit einem Scheitelwinkel von weniger als 90° aufweisen, **dadurch gekennzeichnet**, daß die Schneidränder der angrenzenden Zähne (151) einer Schneidplatte (108, 109) durch eine konkave Fläche begrenzt sind, welche relativ zu der betreffenden Schneidplatte geneigt ist und welche an der Fläche der betreffenden Schneidplatte angeordnet ist, die der anderen Schneidplatte abgewandt ist, so daß die geneigten Flächen aneinandertreffen und die betreffende Schneidplatte zu einer scharfen Spitze an einer Seite entlang des gesamten Abschnitts ausläuft, der mit Zähnen versehen ist, wobei der Antrieb der bewegbaren Schneidplatten (109) in einer solchen Weise erfolgt, daß sich am Ende jedes Hubs die Zähne der zusammenwirkenden Schneidplatten (108, 109) im wesentlichen überdecken so daß die zusammenwirkenden Schneidränder nacheinander scherenartige Bewegungen ausführen.

2. Vorrichtung nach Anspruch 1, **dadurch gekennzeichnet**, daß die Spitzen der Zähne beider Schneidplatten eines Paares zumindest annähernd in derselben horizontalen Ebene liegen.

3. Vorrichtung nach Anspruch 1 oder 2, **dadurch gekennzeichnet**, daß eine geneigte Fläche die Form eines Teils einer zylindrischen Fläche aufweist, so daß der zugeordnete Schneidrand die Form einer Teil-Ellipse aufweist.

## Revendications

1. Dispositif pour extraire l'ensilage d'un silo comprenant un châssis de support (102) avec une pluralité de côtés, le châssis de support étant mobile vers le haut et vers le bas, chaque côté du châssis de support (102) étant muni d'une paire de plaques de coupe dirigées vers le bas (108,109) qui sont positionnées à proximité l'une de l'autre, plaques qui sont munies de rangées de dents de coupe (151), coagissantes et mobiles réciproquement entre elles, toutes les dents de chaque paire de plaques de coupe ayant la même forme et présentant des pointes alguës, pour chaque paire de plaques de coupe, l'une est fixée (108) en position sur le châssis de support et l'autre (109) est mobile, toutes les dents (151) présentant des pointes aiguës avec un angle de pointe inférieur à 90°C, dispositif caractérisé en ce que les bords de coupe des dents contiguës (151) d'une plaque de coupe (108,109) sont limités par une surface concave qui est en déclivité par rapport à la plaque de coupe concernée et qui est située à la surface de la plaque de coupe concernée détournée de l'autre plaque de coupe de telle sorte que les faces en inclinaison se jouxtent entre elles et la plaque de coupe concernée arrive sur une pointe aiguë sur un côté sur toute la portion dotée de dents, l'entraînement des plaques de coupe mobile (109) s'effectue de telle sorte qu'au niveau des extrémités de chaque course les dents des plaques de coupe coagissantes (108,109) coïncident sensiblement de sorte que les bords de coupe coagissants effectuent des mouvements successifs de cisaille.

2. Dispositif selon la revendication 1, caractérisé en ce que les pointes des dents des deux plaques de coupe d'une paire de plaques se situent au moins virtuellement dans le même plan horizontal.

3. Dispositif selon la revendication 1 ou 2, caractérisé en ce qu'une surface d'inclinaison possède la forme d'une partie de surface cylindrique de telle sorte que le bord de coupe associé a la forme d'une ellipse partielle.
